## Europäisches Patentamt
## European Patent Office
## Office européen des brevets

(19)

(11) Publication number: **0 212 431**
**B1**

(12)

# EUROPEAN PATENT SPECIFICATION

(45) Date of publication of the patent specification:
08.11.89

(51) Int. Cl.⁴: **H04Q 11/04,** H04Q 3/68

(21) Application number: **86110828.0**

(22) Date of filing: **05.08.86**

(54) Multistage digital switching network.

(30) Priority: **12.08.85 PL 254969**
**25.03.86 PL 258628**

(43) Date of publication of application:
**04.03.87 Bulletin 87/10**

(45) Publication of the grant of the patent:
**08.11.89 Bulletin 89/45**

(84) Designated Contracting States:
**AT DE FR GB IT NL SE**

(56) References cited:
**EP-A- 0 165 499**
**DE-A- 2 025 102**
**GB-A- 2 014 018**

**ELECTRONICS LETTERS, vol. 20, no. 17, 16th**
**August 1984, page 683, Staines, Middlesex, GB; A.**
**JAJSZCZYK: "Novel architecture for a digital switching**
**network"**
**NTC'77 CONFERENCE RECORD, vol. 3, 5th-7th**
**December 1977, paper 46-4, pages 1-4, New York, US;**
**R.G. FIELD: "Reducing the blocking probability of**
**multistage time division switches"**
**PATENTS ABSTRACTS OF JAPAN, vol. 5,**
**no. 192 (E-85)[864], 8th December 1981; &**
**JP-A-56 115 091**

(73) Proprietor: **POLITECHNIKA POZNANSKA, pl. M.**
**Sklodowskiej-Curie 5, 60-965 Poznan(PL)**

(72) Inventor: **Jajszczyk, Andrzej, Os. Kraju Rad 13/75,**
**Poznan(PL)**
Inventor: **Kabacinski, Wojciech, ul. Polwiejska 27/21,**
**Poznan(PL)**

(74) Representative: **Ebbinghaus, Dieter et al, v. FÜNER,**
**EBBINGHAUS, FINCK Patentanwälte European Patent**
**Attorneys Mariahilfplatz 2 & 3, D-8000 München 90(DE)**

## Description

Subject of the invention is a multistage digital switching network, particularly useful for the construction of a telecommunication system and especially for telephone exchanges.

In well-known solutions of multistage switching networks as described in the publications: K. Neufang "Das Digitalkoppelnetz im System EWSD", Telcom Report, 1981, 4, Beiheft Digitalvermittlungssystem EWSD, pages 28 to 32, and H. Inose "An Introduction To Digital Integrated Communications Systems", Peter Peregrimus Ltd., 1979, pages 141 to 145 there have been used two identical and independent subnetworks, from which in case of emergency, each one can work individually. The line concentrating unit of an exchange is connected with the switching network by a pair of PCM links, from which each one is connected to one of the subnetworks, whereas connections between the respective subnetworks are made by means of a specialized switching equipment.

In another solution, as described in a publication of K. Kurahasi, T. Egawa, J. Shimizu and M. Itoh "DTS-1 Speech Path System", Rev. Electr. Commun. Lab., 1979, 27, pages 728 to 739, there was used a duplication of a middle spacestage of the switching network and in each external timestage an additional switch has been provided.

In another approach as described in a publication of J. M. Cotton, K. Giesken, A. Lawrence and D. C. UPP. "ITT-1240 Digital Exchange Digital Switching Network", Electr. Commun., 1981, 56, pages 148 to 160, the connecting units are connected to the switching network indirectly, through two access switches; besides, each of the said switches is connected to the connecting unit by the separate PCM link.

In the proposed solutions, in order to increase the reliability of operation, a duplication of the complete switching network or only some part of it has been used.

Moreover, there is additionally engaged a specialized switching equipment or is increased the quantity of the applied digital time-space switches.

These undertakings, whereas effective, are very expensive and material-consuming, while due to them the systems of the switching networks are characterized by a considerable degree of complication.

A purpose of the invention was the elaboration of such a multistage switching network, which is characterized by a high reliability and should be produced from standard switching elements, at lower complication of the system and at lower cost of production.

A multistage network according to the invention constitutes a system of two sub-networks, from which each one consists of three modules connected in series, but each of the said modules constitutes a single digital time-space switch either a single- or multi-stage switching network. Both subnetworks are so interconnected to each other that the inputs of the middle module of the first subnetwork are indirectly connected through the connecting module with the outputs of the middle module of the second subnetwork, but the inputs of this middle module are connected indirectly through the second connecting module with the outputs of the middle module of the first subnetwork. Two connecting modules which are interconnecting the subnetworks are identical with the middle modules of both subnetworks.

The above solution enables the structure of switching networks in any range o capacity, characterized by a high reliability. For switching a traffic between both basic parts of a network, the standard switching elements are used. Utilization of nonstandard elements of presently applied technology of a large scale of integration should cause a cost rise of a switching network. In comparison with the solutions based on the duplication of a complete switching network, the network according to the invention is characterized by a smaller number of the utilized switching elements.

According to an alternative solution, both subnetworks are so connected to each other, that the unused outputs of the middle module of each subnetwork are cross-connected to inter-stage links of the other said subnetwork.

The solution presented above is characterized by a smaller number of applied switching elements in comparison with the solution described in the prior art.

The solution according to the invention enables a structure of switching networks characterized by high reliability, however its application is only possible if the quantity of unused links of middle modules will be at least equal to the quantity of links used for the connection with modules of an external stage.

The invention will be explained in greater detail by way of an embodiment as shown in the drawings in which

Fig. 1 shows a block diagram of a general multistage network having a capacity of N PCM links,

Fig. 2 shows a diagram of three-stage network having a capacity of 128 links,

Fig. 3 shows an alternative block diagram of a general multistage network and

Fig. 4 shows an alternative diagram of a three-stage network having a capacity of 64 PCM links.

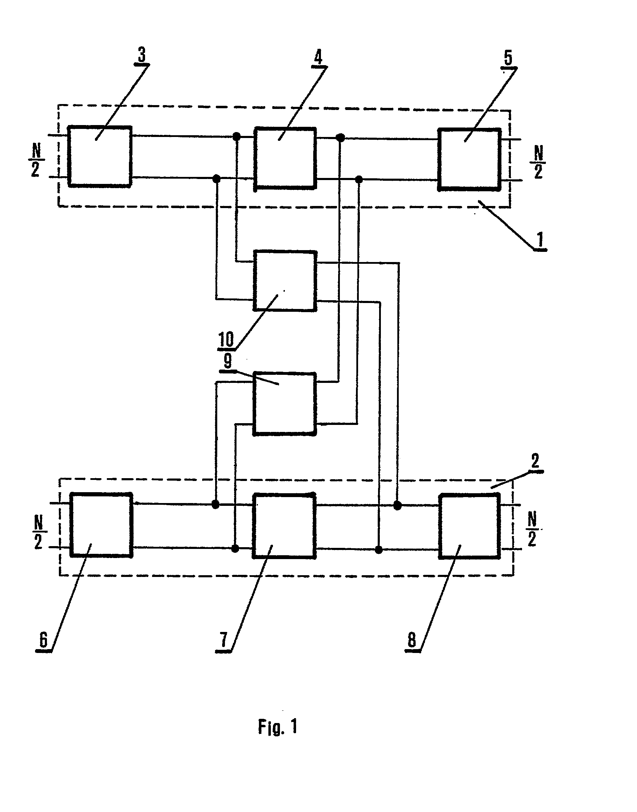

The switching network of Fig. 1 having a capacity of "N x N" PCM links consists of two subnetworks 1 and 2 each of which has a capacity of

$$\frac{"N}{2} \times \frac{N"}{2}$$

links.

Each of the said networks consists of three modules 3, 4, 5 and 6, 7, 8, respectively, which are connected in series, respectively. These modules constitute single switching elements or either a single- or multistage switching network. The subnetworks 1 and 2 are so connected to each other that the inputs and outputs of the middle module 4 of the first subnetwork 1 are cross-connected with the inputs and outputs, respectively, of the middle module 7 of the second subnetwork 2, and the said elements are intermediately connected through a connecting module 9 or 10, respectively, which are identical with the middle modules 4 and 7 of both subnetworks 1 and 2.

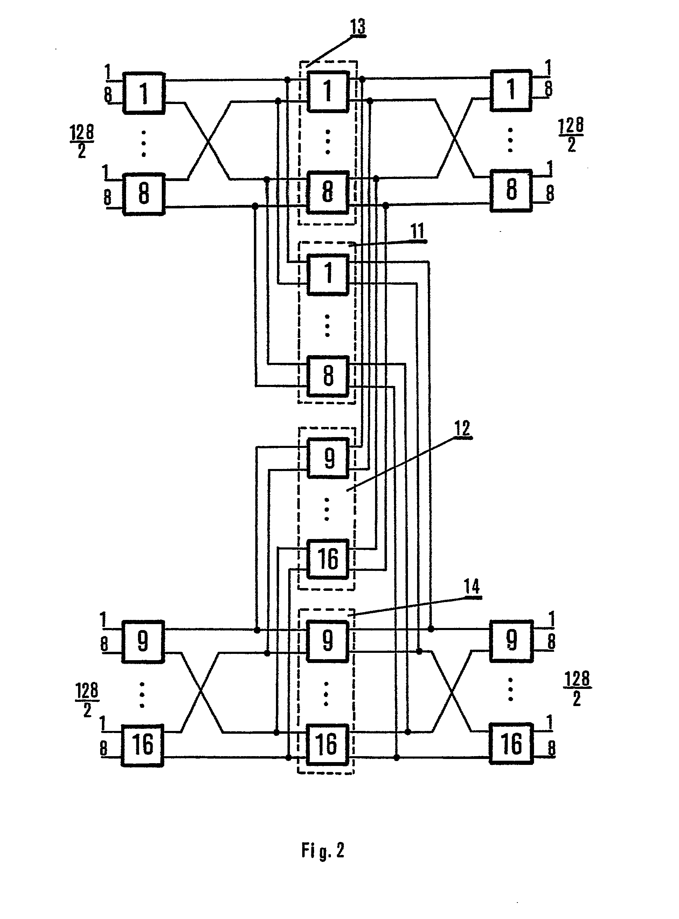

The switching network of Fig. 2 a capacity of 128 PCM links is constructed from time-space switches having a capacity of 8 x 8 links. The subnetworks are connected through the connecting modules 11 and 12, which are identical to the middle stages 13 and 14 of the subnetworks.

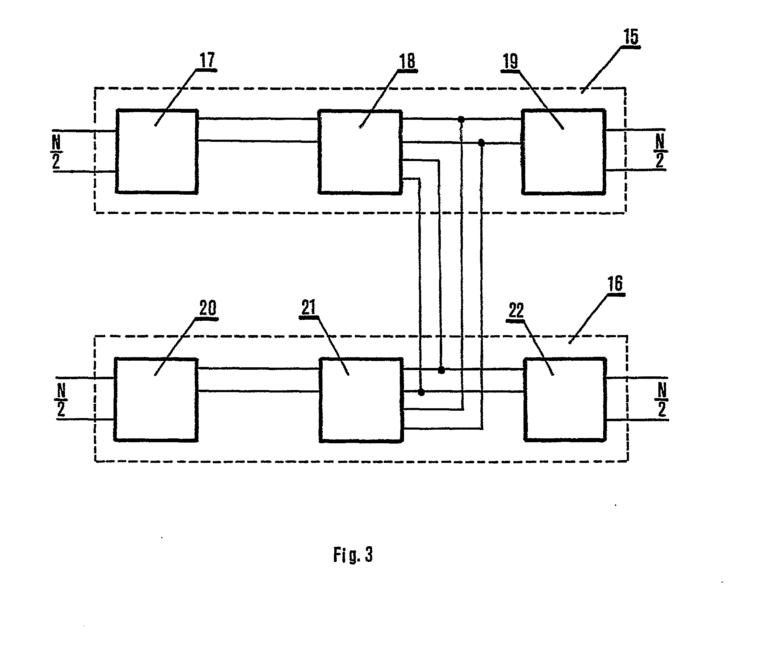

Analogously, as the network shown in Fig. 1, a switching network having a capacity of "N x N" PCM links shown in Fig. 3 consists of two identical subnetworks 15 and 16 each of which having a capacity of

$$\frac{"N}{2} \times \frac{N"}{2}$$

links and consists of three modules 17, 18 and 19 and 20, 21, and 22, respectively, which are connected in series, respectively. The said modules constitute single switching elements and are either single- or multi-stage switching networks.

The subnetworks 15 and 16 are so interconnected to each other, that the unused outputs of the middle modules 18 and 21 are cross-connected to the interstage links in the respective sub-networks.

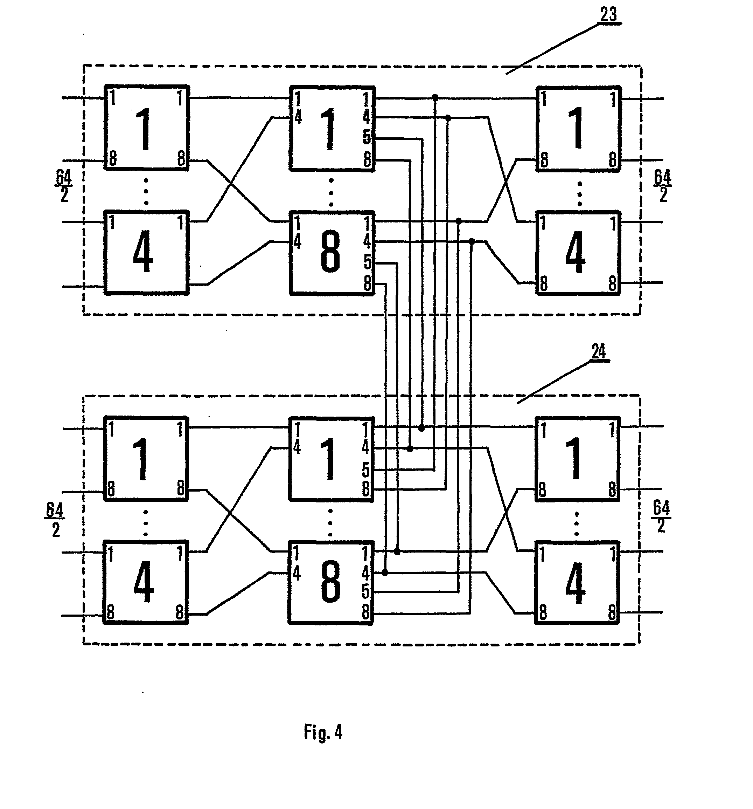

The switching network of Fig. 4 having a capacity of 64 PCM links is constructed from time-space switches having a capacity of 8 x 8 links.

The subnetworks 23 and 24 are connected by means of unused links in the middle stage denoted by numbers from 5 to 8, which are reversibly connected to inter-stage links in the respective subnetworks.

## Claims

1. Multistage digital switching network having a capacity of "N x N" PCM links composed of two identical subnetworks interconnected to each other, each of which having a capacity of

$$\frac{"N}{2} \times \frac{N"}{2}$$

PCM links, characterized in that each of the subnetworks (1, 2) consists of three modules (3, 4, 5 and 6, 7, 8, respectively) which are connected in series, wherein each of the said modules constitutes a single digital time-space switch, which is either a single- or a multi-stage switching network, and that the subnetworks (1, 2) are so interconnected to each other, that the inputs of the middle module (4) of the first subnetwork (1) are indirectly connected through a connecting module (10) with the outputs of the middle module (7) of the second subnetwork (2) and the inputs of this middle module (7) are indirectly connected through a second connecting module (9) with the outputs of the middle module (4) of the first subnetwork (1), the connecting modules (9, 10) being identical with the middle modules (4, 7) of both subnetworks (1, 2).

2. Multistage digital switching network having a capacity of "N x N" PCM links comprising two identical subnetworks interconnected to each other, from which each one has a capacity of

$$\frac{"N}{2} \times \frac{N"}{2}$$

PCM links, characterized in that each of the subnetworks (15, 16) consists of three modules (17, 18, 19 and 20, 21, 22, respectively) which are connected in series, wherein each of the said modules constitutes a single digital time-space switch, which is either a single or multistage switching network, and that the subnetworks (15, 16) are so interconnected to each other, that the unused outputs of the middle module (18, 21) of each subnetwork are reversibly connected to interstage links of the other said subnetwork.

## Patentansprüche

1. Mehrstufiges, digitales Koppelnetz mit einer Kapazität von "N x N" PCM-Leitungen, das aus zwei identischen, miteinander verbundenen Unternetzen besteht, die je eine Kapazität von "N/2 x N/2" PCM-Leitungen haben, dadurch gekennzeichnet, daß jedes Unternetz (1, 2) aus drei in Reihe geschalteten Moduln (3, 4, 5 bzw. 6, 7, 8) besteht, die je einen einzelnen digitalen Zeit-Raum-Koppler bilden, der ein ein- oder mehrstufiges Koppelnetz ist, und daß die Unternetze (1, 2) derart miteinander verbunden sind, daß die Eingänge des mittleren Moduls (4) des ersten Unternetzes (1) über einen Verbindungsmodul (10) indirekt miteinander verbunden sind, wobei die Ausgänge des mittleren Moduls (7) des zweiten Unternetzes (2) und die Eingänge dieses mittleren Moduls (7) indirekt über einen zweiten Verbindungsmodul (9) mit den Ausgängen des mittleren Moduls (4) des ersten Unternetzes (1) verbunden sind, wobei die Verbindungsmoduln (9, 10) mit den mittleren Moduln (4, 7) beider Unternetze (1, 2) identisch sind.

2. Mehrstufiges, digitales Koppelnetz mit einer Kapazität von "N x N" PCM-Leitungen, das aus zwei identischen, miteinander verbundenen Unternetzen besteht, die je eine Kapazität von "N/2 x N/2" PCM-Leitungen haben, dadurch gekennzeichnet, daß jedes Unternetz (15, 16) aus drei in Reihe geschalteten Moduln (17, 18, 19, bzw. 20, 21, 22) besteht, die je einen einzelnen digitalen Zeit-Raum-Koppler bilden, der ein ein- oder mehrstufiges Koppelnetz ist, und daß die Unternetze (15, 16) derart miteinander verbunden sind, daß die nicht ausgenutzten Ausgänge des mittleren Moduls (18, 21) jedes Unternetzes abwechselnd an Zwischenstufenleitungen des anderen Unternetzes angeschlossen sind.

## Revendications

1. Réseau de commutation numérique à plusieurs étages, de capacité "N x N" liaisons MIC, comprenant deux sous-réseaux identiques interconnectés l'un à l'autre, qui possèdent chacun une capacité de "N/2 x N/2" liaisons MIC, caractérisé en ce que chaque sous-réseau (1, 2) se compose de trois modules (respectivement 3, 4, 5 et 6, 7, 8) connectés en série, où chacun desdits modules est constitué par un commutateur spatiotemporel numérique élémentaire qui est un réseau de commutation à un seul ou à plusieurs étages, et en ce que les sous-réseaux (1, 2) sond interconnectés l'un à l'autre de façon que les entrées du module central (4) du premier sous-réseau (1) soient connectées indirectement par l'intermédiaire d'un module de connexion (10) avec les sorties du module central (7) du deuxième sous-réseau (2) et les entrées de ce dernier (7) soient connectées indirectement par l'intermédiaire d'un deuxième module de connexion (9) avec les sorties du module central (4) du premier sous-réseau (1), les modules de connexion (9, 10) étant indentiques aux modules centraux (4, 7) des deux sous-réseaux (1, 2).

2. Réseau de commutation numérique à plusieurs étages de capacité "N x N" liaisons MIC, comprenant deux sous-réseaux identiques interconnectés l'un à l'autre, qui possèdent chacun une capacité de "N/2 x N/2" liaisons MIC, caractérisé en ce que chaque sous-réseau (15, 16) se compose de trois modules (respectivement 17, 18, 19, et 20, 21, 22) connectés en série, où chacun desdits modules est constitué par un commutateur spatiotemporel numérique élémentaire qui est un réseau de commutation à un seul ou à plusieurs étages, et en ce que les sous-réseaux (15, 16) sont interconnectés l'un à l'autre de façon que les sorties non utilisées du module central de chacun des sous-réseaux (18, 21) soient connectées respectivement avec les lignes entre étages de l'autre dit sous-réseau.

Fig. 1

Fig. 2

Fig. 3

Fig. 4